# EUROPÄISCHE PATENTSCHRIFT

(11) **EP 3 290 492 B1**
(45) Veröffentlichungstag und Bekanntmachung des Hinweises auf die Patenterteilung: **10.11.2021**
(21) Anmeldenummer: 16400039.0
(22) Anmeldetag: 06.09.2016
(51) Int. Cl.: C10J 3/30

(54) **VERFAHREN ZUR NACHRÜSTUNG EINES VERSCHLUSSES EINER SCHÜTTGUTSCHLEUSE**
PROCEDURE FOR RETROFITTING A CLOSURE OF A BULK GOODS PORT
PROCÉDURE DE RÉAMÉNAGEMENT D'UNE FERMETURE D'UNE TRÉMIE DE MATÉRIAUX EN VRAC

(43) Veröffentlichungstag der Anmeldung: 07.03.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Arumugam, Ganesh, 60439 Frankfurt am Main (DE); Deisinger, Volker, 63477 Maintal (DE); Judas, Frederic, 60439 Frankfurt am Main (DE); Kress, Michael, 63755 Alzenau (DE)
(74) Vertreter: Dropsch, Holger

(56) Entgegenhaltungen:
- CN-A- 104 648 855
- DE-A1- 1 948 440
- DE-A1- 3 838 725
- LU-A1- 45 849
- Anonymous: "Custom Metal Spun Hopper Cone Funnels | SS304 & SS316 | TMS", TMS product catalogue, 8. Mai 2016 (2016-05-08), Seiten 1-3, XP055321639, Gefunden im Internet: URL:https://www.toledometalspinning.com/pr oducts/product-catalog/seamless-hopper-con e-funnels [gefunden am 2016-11-22]

## Beschreibung

### Gebiet der Erfindung

Die Erfindung betrifft ein Verfahren zur Nachrüstung eines Verschlusses einer Schüttgutschleuse. Durch die Erfindung sollen Störungen des Schließvorganges und Beschädigungen des Verschlusses durch zwischen Verschlusssitz und Schließkörper geratenes Schüttgut vermieden werden. Insbesondere soll mit der Erfindung einem übermäßigen Verschleiß der Dichtungsflächen entgegengewirkt werden.

### Stand der Technik

Verschlüsse für Schüttgutschleusen umfassen häufig einen Sitz mit kreisförmigem Öffnungsrand und einen scheibenförmigen Schließkörper mit angefaster Schließfläche, wobei der Öffnungsrand und die Grundfläche des Schließkörpers horizontal angeordnet sind. Weiterhin umfassen sie eine Mechanik, die den Schließkörper hält und in vertikaler Richtung bewegen kann, wobei der Schließkörper über eine Stange, Kette oder ein Seil mit der Mechanik verbunden ist. Mittels dieser Mechanik kann der Schließkörper die Öffnung der Schüttgutschleuse verschließen. Dabei wird er mit seiner angefasten Schließfläche gegen den Öffnungsrand gedrückt.

Schüttgutschleusen mit derartigen Verschlüssen werden häufig zur Beschickung von Festbettdruckvergasungsreaktoren verwendet, in denen ein fester, kohlenstoffhaltiger Brennstoff, wie Kohle oder Koks, unter Verwendung von Sauerstoff und Dampf, zu einem hauptsächlich aus Kohlenmonoxid und Wasserstoff bestehenden Synthesegas vergast wird. Für weitere Verfahrensdetails wird auf das einschlägige Schrifttum verwiesen, vgl. Ullmanns Encyclopedia of Industrial Chemistry, Sixth Edition, Vol. 15, Seite 367 ff.

Ein Beispiel für einen, dem Gebiet der Erfindung entsprechendem Verschluss, wird in der Anmeldeschrift US 2014/0191151 A1 gezeigt.

Für die gleiche Anwendung, d.h. zum Schließen von Schüttgutschleusen, wird aber auch eine andere Art von Verschlüssen eingesetzt, für die ein Beispiel in der Offeniegungsschrift DE 40 41 445 A1 gezeigt ist.

Ein wesentlicher Unterschied zwischen diesen beiden Ausführungsarten besteht in der Form des Schließkörpers. Im ersten Fall hat dieser die Form einer Scheibe, deren obere Kante, zur Bildung einer schrägen Schließfläche, angefast ist.

Bei der zweiten Ausführungsart ist der Schließkörper kegelförmig. Diese Form gewährleistet, dass die beim Befüllen der Schleuse über den Schließkörper hinweg fallenden Brennstoffklumpen auf der Oberseite des Schließkörpers keinen Halt finden. So wird verhindert, dass sich auf dem Schließkörper Brennstoffklumpen ablagern, die beim Schließen des Verschlusses durch Erschütterungen herabfallen und zwischen die Sitzkante und die Schließfläche des Schließkörpers geraten könnten. Die Ausführung des Schließkörpers als Kegel ist allerdings konstruktiv aufwendiger und kostenintensiver. DE 38 38 725 A1 offenbart eine Koksofenbeschickungsvorrichtung mit einem Kohlevorratsbehälter, der am Boden einen Auslass besitzt, welcher durch ein glockenförmiges beziehungsweise kegelförmiges Ventil abgedichtet wird. Ventile dieser Bauart werden auch von der LU 45 849 A1 sowie der CN 104 648 855 A offenbart.

Dagegen ist die Bildung von Brennstoffablagerungen bei einem scheibenförmigen Schließkörper nicht auszuschließen, da dessen Oberseite flach ist. Es besteht daher bei dieser Art des Schließkörpers die Gefahr, dass beim Schließvorgang Brennstoffklumpen zwischen den Verschlusssitz und die Schließfläche geraten und dass es dabei zu Beschädigungen kommt, die ein gasdichtes Abschließen verhindern und so zu Reparaturstillständen der Vergasungsanlage führen.

Aufgabe der Erfindung ist es ein Verfahren vorzuschlagen, mit dem ein Verschluss mit einem scheibenförmigen Schließkörper so verändert werden kann, dass die beschriebenen Nachteile vermieden werden.

### Beschreibung der Erfindung

Die Aufgabe wird durch ein Verfahren gemäß Anspruch 1 gelöst.

### Erfindunasgemäßes Verfahren:

Verfahren zur Nachrüstung eines Verschlusses einer Schüttgutschleuse, ausgestattet mit einem scheibenförmigen Schließkörper mit flacher Oberfläche, dadurch gekennzeichnet, dass der scheibenförmige Schließkörper mit flacher Oberfläche mit einer Haube versehen wird, wobei die Haube kegelförmig ist und wobei die Grundfläche der Haube die gleiche Größe hat wie die Oberseite des Schließkörpers.

Auf diese Weise können bereits bestehende Schüttgutschleusen nachgerüstet werden, so dass Dichtigkeitsprobleme, die durch unerwünschte Ablagerungen von Schüttgut auf der flachen Oberfläche des scheibenförmigen Schließkörpers entstehen, reduziert werden.

Durch die Abdeckung der flachen Oberseite des scheibenförmigen Schließkörpers mit einer Haube wird die Ablagerung von BrennstoflkIumpen auf dem Schließkörper verhindert. Die Haube deckt die flachen Stellen der Oberseite des Schließkörpers und die auf der Oberseite des Schließkörpers vorhandene Befestigungselemente, Stange oder Kette, mit denen der Schließkörper gehalten und bewegt wird, ab. Es können bereits bestehende Schüttgutschleusen in einfacher Weise mit der erfindungsgemäßen Haube nachgerüstet werden, so dass Dichtigkeitsprobleme, die durch unerwünschte Ablagerungen von Schüttgut auf der flachen Oberfläche des scheibenförmigen Schließkörpers entstehen, reduziert werden.

Vorteilhaft ist es, dass die Haube aus dünnwandigem Material gefertigt werden kann, da sie lediglich das herabfallende Schüttgut ableiten soll, aber keine mechanischen Kräfte aufnimmt, die sich durch das Einpressen des Schließkörpers in den Sitz des Verschlusses ergeben. Letztere werden allein von dem Schließkörper aufgenommen.

### Bevorzugte Ausgestaltungen der Erfindung

Eine bevorzugte Ausgestaltung der Erfindung ist dadurch gekennzeichnet, dass die Haube aus einem oberen kegelförmigen Teil und einem unteren zylindrischen oder kegelstumpfförmigen Teil zusammengesetzt ist. Auf diese Weise kann die Form der Haube den jeweiligen Platzverhältnissen angepasst werden, ohne dass Flächen oder Kanten auf der Haubenoberfläche gebildet werden, auf denen es zu Ablagerungen kommen könnte.

Eine weitere bevorzugte Ausgestaltung der Erfindung ist dadurch gekennzeichnet, dass die Haube so gestaltet ist, dass der zwischen ihrer Kegelmantelfläche und der flachen Oberfläche des Schließkörpers gebildete Winkel größer oder gleich dem Schüttwinkel des in die Schüttgutschleuse gegebenen Schüttguts ist. Auf diese Weise wird erreicht, dass die Neigung der Kegel-, bzw. der Haubenmantelfläche groß genug ist, damit Schüttgutklumpen von ihr abrutschen. Der Schüttgutwinkel muss für das jeweilige Schüttgut gemäß dem Fachmann bekannten Standardmethoden experimentell ermittelt werden.

Die Offenbarung umfasst weiterhin einen Verschluss für eine Schüttgutschleuse, umfassend einen Sitz mit kreisförmigem Öffnungsrand und einen scheibenförmigen Schließkörper mit angefaster Schließfläche, wobei die Oberseite des Schließkörpers mit einer Haube abgedeckt ist.

Die Offenbarung beschreibt auch eine Schüttgutschleuse für einen Festbettdruckvergasungsreaktor, der mit einem Verschluss ausgestattet ist.

### Ausführungsbeispiele

Weiterbildungen, Vorteile und Anwendungsmöglichkeiten der Erfindung ergeben sich auch aus der nachfolgenden Beschreibung von nicht beschränkenden Ausführungsbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Anhand der Zeichnungen soll die Erfindung im Folgenden erläutert werden. Es zeigen:
- Fig. 1: einen Längsschnitt eines erfindungsgemäßen Schließkörpers mit kegelförmiger Haube,
- Fig. 2: einen Längsschnitt eines Schließkörpers mit einer Haube, die aus einem kegelförmigen oberen und einem zylindrischen unteren Teil besteht,
- Fig. 3: einen Längsschnitt eines Schließkörpers mit einer Haube, die aus einem kegelförmigen oberen und unteren Teil mit unterschiedlichem Neigungswinkel der Mantelfläche zur Grundfläche besteht.

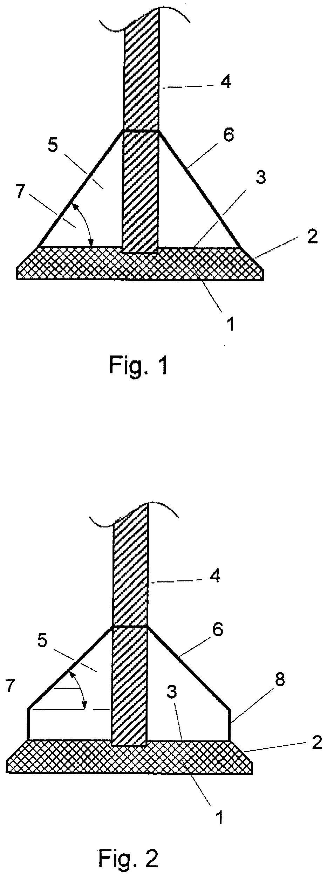

Fig. 1 zeigt einen scheibenförmigen Schließkörper 1 mit seiner angefasten Schließfläche 2 und seiner flachen Oberseite 3. Der Schließkörper 1 ist mit einer Stange 4 verbunden, mittels der er gehalten und in vertikaler Richtung bewegt wird. Die Haube 5 deckt die flache Oberseite 3 des Schließkörpers 1 vollständig ab, sodass sich dort keine Schüttgutablagerungen bilden können. Die Mantelfläche 6 der Haube 5 bildet mit der flachen Oberseite 3 des Schließkörpers 1 den Winkel 7.

Fig. 2 zeigt einen Schließkörper gemäß Fig. 1, aber ausgestattet mit einer Haube, die aus einem oberen kegelförmigen Teil 6 und einem unteren zylindrischen Teil 8 besteht.

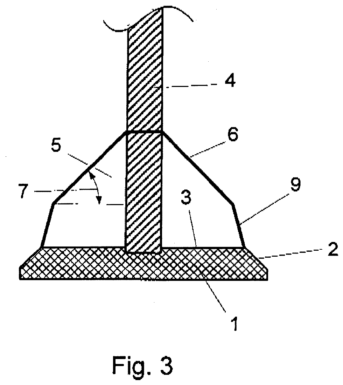

Fig. 3 zeigt einen Schließkörper gemäß Fig. 1, aber ausgestattet mit einer Haube, die aus einem kegelförmigen oberen Teil 6 und unteren Teil 9 mit unterschiedlichem Neigungswinkel der jeweiligen Mantelfläche zur Grundfläche besteht.

### Gewerbliche Anwendbarkeit

Die Erfindung schützt den Verschluss von Schüttgutschleusen gegen Beschädigungen durch eingeklemmtes Schüttgut. Dadurch wird die Standzeit des Verschlusses erhöht und die Häufigkeit von Reparaturstillständen verringert. Somit erhöht die Erfindung die Wirtschaftlichkeit des mit ihr verbundene Reaktors und Produktionsverfahrens. Die Erfindung ist daher vorteilhaft gewerblich anwendbar.

### Bezugszeichenliste

- 1: Schließkörper
- 2: Angefaste Schließfläche
- 3: Flache Oberseite des Schließkörpers
- 4: Stange
- 5: Haube
- 6: Mantelfläche
- 7: Winkel
- 8: Zylindrischer Teil der Haube
- 9: Unterer, kegelförmiger Teil der Haube

## Patentansprüche

1. Verfahren zur Nachrüstung eines Verschlusses einer Schüttgutschleuse, ausgestattet mit einem scheibenförmigen Schließkörper (1) mit flacher Oberfläche (3), **dadurch gekennzeichnet, dass** der scheibenförmige Schließkörper (1) mit flacher Oberfläche (3) mit einer Haube (5) versehen wird, wobei die Haube (5) kegelförmig ist und wobei die Grundfläche der Haube die gleiche Größe hat wie die Oberseite (3) des Schließkörpers.

2. Verfahren nach Anspruch 1, **dadurch gekennzeichnet, dass** die Haube (5) aus einem oberen kegelförmigen Teil und einem unteren zylindrischen (8) oder kegelstumpfförmigen (9) Teil zusammengesetzt ist.

3. Verfahren nach Anspruch 1 oder 2, **dadurch gekennzeichnet, dass** die Haube so gestaltet ist, dass der zwischen ihrer Kegelmantelfläche (6) und der flachen Oberfläche des Schließkörpers (3) gebildete Winkel (7) größer oder gleich dem Schüttwinkel des in die Schüttgutschleuse gegebenen Schüttguts ist.

## Claims

1. Method for retrofitting a closure for a bulk-material lock, equipped with a disc-shaped closing body (l) with a flat surface (3), **characterized in that** the disc-shaped closing body (l) with a flat surface (3) is provided with a hood (5), wherein the hood (5) is conical and wherein the base surface of the hood has the same size as the top side (3) of the closing body.

2. Method according to Claim 1, **characterized in that** the hood (5) is composed of an upper, conical part and a lower, cylindrical (8) or frustoconical (9) part.

3. Method according to Claim 1 or 2, **characterized in that** the hood is configured such that the angle (7) formed between the cone lateral surface (6) of said hood and the flat surface of the closing body (3) is greater than or equal to the tipping angle of the bulk material tipped into the bulk-material lock.

## Revendications

1. Procédé de rééquipement d'une fermeture d'un sas pour produits en vrac, laquelle est pourvue d'un corps de fermeture (1) en forme de disque à surface plane (3), **caractérisé en ce que** le corps de fermeture (1) en forme de disque à surface plane (3) est muni d'un capot (5), le capot (5) étant conique et la surface de base du capot ayant la même dimension que le côté supérieur (3) du corps de fermeture.

2. Procédé selon la revendication 1, **caractérisé en ce que** le capot (5) est composé d'une partie supérieure conique et d'une partie inférieure cylindrique (8) ou tronconique (9).

3. Procédé selon la revendication 1 ou 2, **caractérisé en ce que** le capot est conçu de sorte que l'angle (7) formé entre sa surface d'enveloppe de cône (6) et la surface plane du corps de fermeture (3) soit supérieur ou égal à l'angle de déversement du produit en vrac amené dans le sas pour produits en vrac.
